Europäisches Patentamt

European Patent Office

Office européen des brevets

(11) Publication number: **0 081 736**
**B1**

(12) **EUROPEAN PATENT SPECIFICATION**

(45) Date of publication of patent specification: **25.09.85**

(21) Application number: **82111041.8**

(22) Date of filing: **30.11.82**

(51) Int. Cl.⁴: **A 01 K 1/015**

(54) **Floor-mat element.**

(30) Priority: **11.12.81 NL 8105591**

(43) Date of publication of application:
**22.06.83 Bulletin 83/25**

(45) Publication of the grant of the patent:
**25.09.85 Bulletin 85/39**

(84) Designated Contracting States:
**AT BE CH DE FR GB IT LI LU NL SE**

(56) References cited:
**AT-B- 347 731**
**CH-A- 419 547**
**DE-A-2 509 073**
**DE-B-1 201 600**

(73) Proprietor: **Broos B.V.**
**Muiderkring 12**
**NL-4873 GV Etten-Leur (NL)**

(72) Inventor: **Kraayenhof, Hans**
**Vlosbergweg 8**
**NL-5725 RM Heusden (gem. Asten) (NL)**

(74) Representative: **Hoijtink, Reinoud et al**
**OCTROOIBUREAU ARNOLD & SIEDSMA**
**Sweelinckplein1**
**NL-2517 GK Den Haag (NL)**

Courier Press, Leamington Spa, England.

## Description

The invention relates to a floor-mat element of flexible material, for example, rubber, comprising a plate-shaped web having on the top and bottom sides discrete, profile elements being integral with the web and protruding therefrom.

Such a floor-mat element is known from CH—A—419.547.

In such a floor-mat element the profile is necessary to provide a firm hold thereon and to gather dirt in the interstices between the protruding profile elements. When such a floor-mat element is used in a stable, for example, a shed, the interstices between the profile elements have to retain the litter.

With such a floor-mat element contradictory requirements are imposed on the profile elements. On the one hand the profile must not be too deep for allowing satisfactory cleaning and on the other hend the profile must not be too shallow to offer a firm hold. The result is that the known floor-mat elements either do not ensure sufficient grip or can be cleaned only with difficulty.

The object of the invention is to provide a floor-mat element of the kind set forth in the preamble which can be satisfactorily cleaned and provides a firm grip.

According to the invention this is achieved by the features defined in the characterising features of claim 1.

When in accordance with the invention the profile elements on both sides overlie one other in a direction transverse of the web, the discrete profile elements on both sides virtually constitute together blocks lying on the ground, whilst the flexible web extends at an intermediate level. As a result the blocks themselves do not bend when loaded, but the web does so all the more.

The profile elements have to be discrete, rather than being continuous like for instance ribs, to assure the flexibility of the web.

When loaded the web bends down in the profile-free parts on the bottom side so that the foot or paw deeply penetrates into the floor-mat element and the effect of a profile deeper than the profile proper is obtained, the floor-mat element embodying the invention thus offering a firm hold and trouble-free cleaning. When the floor-mat element is used with the comparatively shallow profile on top an additional grip is obtained by the flexure of the web. With the deep profile on top much dirt or sawdust can be retained in the floor-mat element. Therefore, the floor-mat element can be employed under various conditions.

It is noted that from the DE—A—2.509.073 a floor-mat element is known, the top and bottom sides of which are provided with profile elements which protrude from the web only over a short distance. The height of the profile elements on one side differs only little from that of the profile elements on the other side. Since the profile elements protrude from the web only over a small distance the dirt retaining capacity and the extent of the grip are low.

When in accordance with the invention draining holes are formed between the profile elements in the web, whilst the profile elements at least on the bottom side are formed by a large number of discrete profile elements moisture is conducted away below the mat and no moisture will be left on the mat itself.

The depressability of the floor-mat element is everywhere the same so that on all places the same grip is obtained.

When the floor-mat element embodying the invention is used in a stable, it is important that the aforesaid litter should stay as much as possible on the mat and spray cleaning should not give rise to trouble. The channels formed between the profile elements should be able to retain the litter, but allow the liquid to pass readily. According to the invention this is achieved in a floor-mat element in which adjacent discrete profile elements are at an angle to one another. Then the channels formed between the profile elements extend in meandering or zigzag fashion so that a high "flow resistance" is obtained for the litter, but a comparatively low one for the flushing water.

Preferably the profile elements have an elongated shape, whilst the ends are at an angle to a neighbouring part. In this way the profile elements have satisfactory bending resistance, which is desirable for obtaining a firm hold and a long lifetime. For a given desired rigidity material can thus be saved as compared with the conventional, elongate profiled elements.

In a very advantageous embodiment of the invention each profile element of the floor-mat element has a rounded-off, at least slightly stretched S-shape. Thanks to the relative angular positions of the side faces of the S a firm hold is obtained in all senses. Moreover, the rounded-off shape ensures satisfactory drainage of flush water, whilst no dirt will stick in sharp corners and the litter is satisfactorily retained owing to the staggering course of the channels. Moreover, this shape of the profile elements provides a satisfactory surface distribution so that the overall sectional area of the profile elements may be small as compared to the surface of the floor-mat element. Whilst all requirements are properly met, material is saved in addition.

The invention will be described more fully hereinafter with reference to drawings showing embodiments.

Fig. 1 is a partial plan view of a first embodiment.

Fig. 2 is a sectional view taken on the line II—II in fig. 1.

Fig. 3 is a partial plan view of a second embodiment.

Fig. 4 is a sectional view taken on the line IV—IV in fig. 3.

Fig. 5 is a partial plan view of a third embodiment.

Fig. 6 is a sectional view taken on the line VI—VI in fig. 5.

Fig. 7 is a partial plan view of a fourth embodiment.

Fig. 8 is a sectional view taken on the line VIII—VIII in fig. 7.

Fig. 9 is a perspective view of part of a floor-mat element as shown in fig. 3 in practical use.

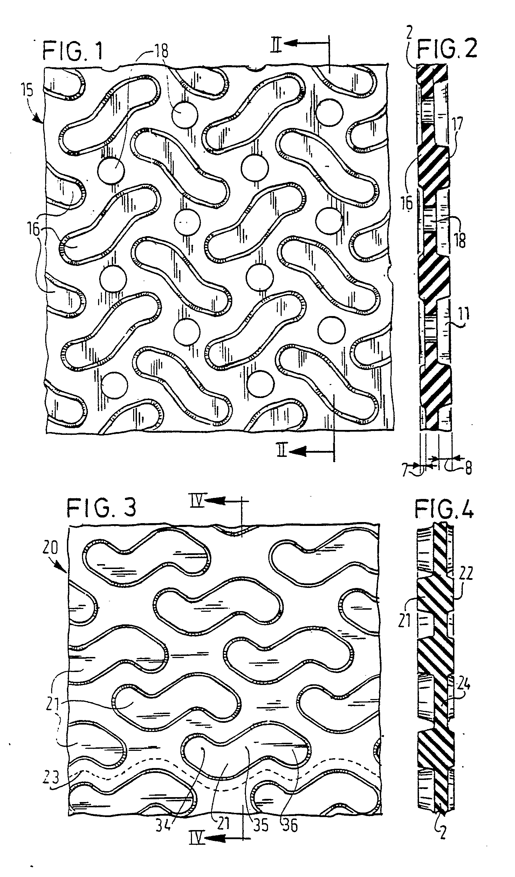

The floor-mat element 15 embodying the invention shown in fig. 1 and 2 comprises a plate shaped web having on the top side discrete profile elements 17, being integral with the web 2, of greater height 8 that the height 7 of the profile elements 16 on the bottom side, also being integral with the web 2. Of course, the floor-mat element 15 can also be used with the lower profile elements 16 on top. The web 2 has in the interstices 11 between the profile elements 16, 17 draining holes 18. Through these draining holes 18 the liquid can be conducted away to the bottom side of the mat element and through the channels formed between the profile elements 17. A floor-mat element 15 is, for example, particularly suitable for use in the milking house of a dairy farm. Raining water dripping from the entering cows and wash water is rapidly conducted away below the mat 15 without the cows standing with their legs in the water.

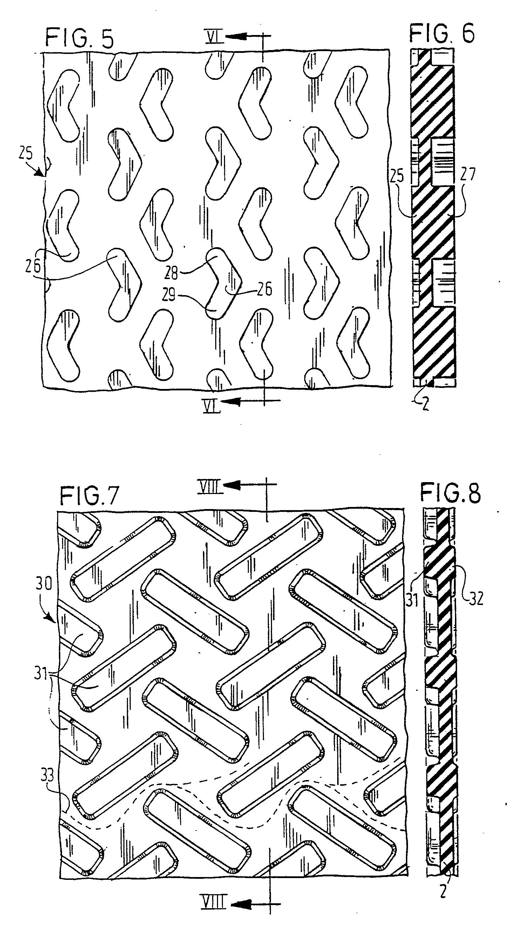

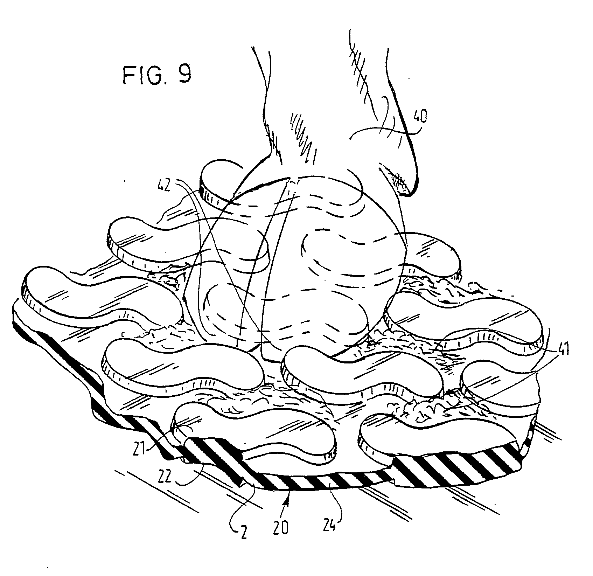

Figs. 3 and 4 show a floor-mat element 20 according to the invention having particularly advantageous discrete profile elements 21 and 22. According to the invention these profile elements 21 and 22 have a rounded-off, at least slightly stretched S shape. Owing to the many surfaces at an angle to one another, for example, the hoof 42 of the cow shown in fig. 9 finds a firm hold in all directions. Since the profile elements 21 are separated from one another flushing water can be readily conducted away. The channels formed between the profile elements 21 and 22 as indicated by the broken line 23 have a meandering or zigzag shape so that the litter 41 will not readily slide away along the channels of the floor-mat element. Fig. 3 clearly shows that the S-shaped profile elements 21 provide a satisfactory surface filling so that the overall surface of the sections of the profile elements may be small with respect to the overall surface of the floor-mat element 20. In the embodiment shown the surface of the profile elements is not even 40% of the total surface. The resultant saving of the material is also enabled by the fact the the S-shaped profile elements are strong. The ends 34 and 36 are at an angle to the adjacent part 35. Thus a satisfactory bending resistance is obtained, which is particularly important for the high profile elements 21. In other words profile elements whose ends are each at an angle to a neigbouring part have, with less material, the same rigidity as profile elements of rectangular shape like the profile elements 31 and 32 of the floor-mat element 30 shown in figs. 7 and 8.

The aforesaid advantage is also obtained by the profile elements 16, 17 of the floor-mat element 15 and the profile elements 26, 27 of the floor-mat element 25 shown in figs. 5 and 6. The ends 28 and 29 of the profile elements 26 are each at an angle to the adjacent ends 29, 28.

In the floor-mat element 30 according to the invention shown in figs. 7 and 8 neighbouring profile elements 31 are at an angle to one another. In this way zigzag channels are formed between the rectangular profile elements 31. In fig. 7 such a channel is indicated by the broken line 33.

In the floor-mat elements 15, 20, 25 and 30 the discrete profile elements on both sides cover one another in a direction transverse of the web. Fig. 9 shows for the floor-mat element 20 that the profile elements 21, 22 on both sides of the web 24 form together "blocks" bearing on the ground, whereas the web 24 is located at an intermediate level. This results in a firm grip on the mat. When, as is shown in fig. 9, the claws 42 of the cow leg 40 are standing between the profile elements 21 the web 24 is locally depressed so that the profile elements 21 have an effectively increased height to offer a firm hold. The profile elements 21 themselves cannot be depressed beyond their own elasticity. When a car passes over such a floor-mat element, the wheels come into contact only with the top surface of the non-resilient profile elements 21 so that rolling resistance is limited.

## Claims

1. A floor-mat element (15, 20, 25, 30) of flexible material, for example rubber, comprising a planar web (2) having on top and bottom sides discrete profile elements (16, 17; 21, 22; 26, 27; 31, 32) being integral with said web and protruding therefrom, characterised in that said profile elements on the top side have a different height from, but the same shape, viewed in plan, as those on the bottom side and that said profile elements on both sides substantially overlie one another in a direction transverse of the web.

2. A floor-mat element as claimed in claim 1 characterised by draining holes (18) formed in the web. (2) between the profile elements (16, 17).

3. A floor-mat element as claimed in claim 1 or 2, characterised in that neighbouring profile elements (31) are at an angle to one another.

4. A floor-mat element as claimed in anyone of claims 1 to 3, characterised by elongate profile elements (21), the ends (34, 36) of which are each at an angle to an adjacent part (35).

5. A floor-mat element as claimed in claim 4 characterised in that each profile element (21, 22) has a rounded-off, at least slightly stretched S-shape.

## Revendications

1. Elément (15, 20, 25, 30) de revêtement de sol en matière souple, par exemple, en caoutchouc, comprenant une âme plane (2) munie sur ses faces supérieures et inférieures d'éléments profilés discrets (16, 17, 21, 22), 26, 27, 31, 32) qui sont formés en une seule pièce avec ladite âme et qui font saillie sur cette dernière, caractérisé en ce que lesdits éléments profilés situés sur la face supérieure ont une hauteur différente de ceux situés sur la face inférieure mais ont la même forme, vus en plan, et en ce que lesdits éléments profilés situés sur les deux faces sont sensiblement superposés les uns aux autres dans une direction transversale à l'âme.

2. Elément de revêtement de sol tel que revendiqué dans la revendication 1, caractérisé en ce qu'il est prévu des trous d'évacuation (18) formés dans l'âme (2) entre les éléments profilés (16, 17).

3. Elément de revêtement de sol tel que revendiqué dans la revendication 1 ou 2, caractérisé en ce que les éléments profilés (31) voisins s'étendent obliquement les uns par rapport aux autres.

4. Elément de revêtement de sol tel que revendiqué dans l'une quelconque des revendications 1 à 3, caractérisé en ce que'il est prévu des éléments profilés allongés (21) dont chacune des extrémités (34, 36) s'étend obliquement par rapport à une partie adjacente (35).

5. Elément de revêtement de sol tel que revendiqué dans la revendication 4, caractérisé en ce que chaque élément profilé (21, 22) a la forme d'un S arrondi, au moins légèrement allongé.

**Patentansprüche**

1. Bodenmattenelement (15, 20, 25, 30) aus flexiblem Material, beispielsweise Gummi, mit einem ebenen Gewebe (2), das auf seiner Ober- und Unterseite einstückig angeformte und daraus hervorstehende einzelne Profilelemente (16, 17; 21, 22; 26, 27; 31, 32) aufweist, dadurch gekennziehnet, daß die Profilelemente auf der Oberseite eine unterschiedliche Höhe, jedoch in der Ebene betrachtet gleiche Form wie die auf der Unterseite aufweisen und daß diese Profilelemente auf beiden Seiten in einer Richtung senkrecht zum Gewebe im wesentlichen übereinander liegen.

2. Bodenmattenelement nach Anspruch 1, dadurch gekennzeichnet, daß Durchflußöffnungen (18) zwischen den Profilelementen (16, 17) in das Gewebe (2), eingeformt sind.

3. Bodenmattenelement nach Anspruch 1 oder 2, dadurch gekennzeichnet, daß die benachbarten Profilelemente (31) gegenseitig in einem Winkel zueinander stehen.

4. Bodenmattenelement nach einem der Ansprüche 1 bis 3, gekennzeichnet durch langgestreckte Profilelemente (21), deren Enden (34, 36) jeweils in einem Winkel zum danebenliegenden Abschnitt (35) liegen.

5. Bodenmattenelement nach Anspruch 4, dadurch gekennzeichnet, daß jedes Profilelement (21, 22) eine abgerundete, zumindest leicht gestreckte S-Form aufweist.

FIG. 1

FIG. 2

FIG. 3

FIG. 4

FIG. 5

FIG. 6

FIG.7

FIG.8

FIG. 9